# EUROPÄISCHE PATENTSCHRIFT

(11) **EP 2 165 893 B1**
(45) Veröffentlichungstag und Bekanntmachung des Hinweises auf die Patenterteilung: **29.05.2019**
(21) Anmeldenummer: 09170850.3
(22) Anmeldetag: 21.09.2009
(51) Int. Cl.: A01B 63/16, B60B 33/00

(54) **Eine ein schleppfähiges, schwenkbares Stützrad aufweisende Stützanordnung für mobile Objekte**
A support assembly for mobile objects with a pivoting support wheel that can be towed
Un agencement d'appui pour objets mobiles comprenant une roue d'appui pivotante, remorquable

(30) Priorität: 20.09.2008 DE 102008048200
(43) Veröffentlichungstag der Anmeldung: 24.03.2010
(73) Patentinhaber: Gaßner, Lieselotte, 85653 Aying-Göggenhofen (DE)
(72) Erfinder: Gassner, Benno, 85653 Aying-Göggenhofen (DE)
(74) Vertreter: Weickmann & Weickmann PartmbB

(56) Entgegenhaltungen:
- DE-A1- 1 805 607
- DE-A1- 3 810 372
- FR-A- 1 283 071
- FR-A- 1 320 912
- GB-A- 693 320
- GB-A- 2 379 385
- JP-A- S5 755 201
- US-A- 1 839 396

## Beschreibung

Die Erfindung betrifft eine Stützanordnung für ein mobiles Objekt, mit einem Stützradträger, an dem um eine erste Achse lose drehbar ein Stützrad gelagert ist, das zur Veränderung seiner Laufrichtung gemeinsam mit dem Stützradträger um eine einen Abstand von der ersten Achse aufweisende und in einer die Fortbewegungsrichtung des Objekts enthaltenden, vertikalen Ebene verlaufende zweite Achse gegenüber dem Objekt frei beweglich ist.

Wenn nachfolgend der Begriff "Stützrad" verwendet wird, ist damit jeweils die Gesamtheit der in einem Stützradträger um eine gemeinsame Achse drehbar gelagerten Stützräder zu verstehen, die aus einem oder mehreren Stützrädern bestehen kann.

Bei den zu bewegenden Objekten kann es sich beispielsweise um von einem Schlepper gezogene landwirtschaftliche Geräte handeln, um fahrbare Behälter oder Regale, oder um größere Einrichtungsgegenstände, allgemein also um Objekte, die für einen Ortswechsel nicht von der sie tragenden Oberfläche abgehoben werden, sondern in lastübertragendem Kontakt mit dieser Oberfläche bleiben sollen. Dabei wird in der Regel die das Objekt bewegende Kraft von außen auf das Objekt übertragen und dabei das Stützrad in der Wirkungsrichtung der Kraft vom Objekt mitgeschleppt. Weicht in der Ruheposition des Objekts die Laufrichtung des Stützrads von der Wirkungsrichtung der Kraft ab, wird das Stützrad mitsamt dem Stützradträger um die zweite Achse verschwenkt, bis seine Laufrichtung in diese Wirkungsrichtung eingeschwenkt ist.

### Stand der Technik

Bei bekannten Konstruktionen dieser Art verläuft die zweite Achse (Lenkachse) im wesentlichen vertikal. Die Laufruhe bzw. Spurhaltigkeit des Stützrads während der Bewegung des Objekts ist abhängig vom radialen Abstand zwischen dem Radaufstandspunkt und der zweiten Achse. Je geringer dieser Abstand ist, um so mehr neigt das Stützrad zum Flattern, d.h. zur Neigung, um die zweite Achse zu pendeln. Zur Unterdrückung des Flatterns ist bei bekannten Konstruktionen dieser Abstand relativ groß gewählt, was zwar der Spurführung des Stützrads zugute kommt bzw. die Neigung des Stützrads zum Pendeln um die zweite Achse reduziert, Wenn sich die Bewegungsrichtung des Objekts umkehrt, also beispielsweise ein Gerät anschließend an eine Vorwärtsbewegung eine Rückwärtsbewegung ausführen soll, stellt sich das Rad quer und blockiert die Bewegung, zu deren Fortsetzung ein zusätzlicher Kraftaufwand erforderlich ist, insbesondere wenn das Rad auf ein Hindernis trifft. Die Kraft steigt dabei entsprechend dem Widerstand des jeweils zu überwindenden Hindernisses an, bis der Widerstand überwunden ist und das Objekt ruckartig seine gewünschte Bewegung fortsetzt. Zugleich erfährt das zu bewegende Objekt bei der Umkehrung seiner Bewegungsrichtung eine seitliche Verlagerung aus seiner vorgesehenen Bewegungsbahn, die um so größer ist, je größer der radiale Abstand zwischen der ersten und der zweiten Achse ist. Dabei verschwenkt sich das Objekt gegenüber dem Aufstandspunkt des Stützrads auf einem Kreisbogen und das Objekt weicht gegenüber der gewünschten Bewegungsrichtung seitlich nach rechts oder links aus. Das schränkt die Manövrierfähigkeit des Objekts bei beengten Raumverhältnissen ein und hat insbesondere bei Objekten, die nur ein einziges schwenkbares Stützrad aufweisen, wie z.B. Pflüge, oder bei Dreiradabstützungen, die neben einem einer gemeinsamen Achse zugeordneten, starr gelagerten Räderpaar noch mit Abstand von der Achse dieses Räderpaars ein lose verschwenkbar angebrachtes drittes Rad besitzen, wie etwa bekannte Kinderwagen, den Nachteil einer erhöhten Kippgefahr durch die seitliche Verlagerung des Schwerpunkts des zu bewegenden Objekts auf.

Aus der DE 38 10 372 A1 und der FR 1 283 071 A sind jeweils Stützanordnungen entsprechend dem Oberbegriff des Anspruchs 1 bekannt. Aus der GB 2 379 385 A, der DE 18 05 607 A1, der FR 1 320 912 A, der US 1 839 396 A und der JP S57 55201 A sind jeweils Stützanordnungen entsprechend dem Oberbegriff des Anspruchs 12 bekannt.

### Aufgabe der Erfindung

Es stellt sich deshalb die Aufgabe, eine Stützanordnung der eingangs beschriebenen Art derart auszugestalten, dass sie geeignet ist, einerseits eine ruckfreie, leichtgängige Änderung der Bewegungsrichtung des Objekts und einen möglichst geringen Abstand zwischen der ersten und der zweiten Achse und damit eine schmale, die Breite des Objekts nur wenig überschreitende Bewegungsbahn des Objekts zu erreichen, und andererseits eine ruhige, flatterfreie Fahrweise zu ermöglichen.

### Lösung der Aufgabe

Eine erfindungsgemäße Lösung besteht nach einem ersten Lösungsgedanken darin, dass der Stützradträger, der zwischen zwei definierten Endstellungen verschwenkbar derart am Objekt gelagert ist, dass zumindest in einer dieser beiden Endstellungen der Stützradträger schräg abwärts verläuft, vorzugsweise aber in beiden Endstellungen der Stützradträger jeweils in entgegengesetzter Richtung schräg abwärts verläuft, mit einer Lenkachse als zweite Achse verbunden ist, wobei die Lenkachse frei drehbar in einer Lagerhülse gelagert ist oder durch eine Lagerbohrung und einen frei drehbar in der Lagerbohrung gelagerten Lagerzapfen ausgebildet ist, wobei die Lagerhülse bzw. die Lagerbohrung ihrerseits gegenüber dem mobilen Objekt in der vertikalen Ebene um eine horizontale und quer zur Bewegungsrichtung des Objekts verlaufenden dritten Achse zwischen einer der Vorwärtsbewegung des Objekts zugeordneten Endstellung und einer der Rückwärtsfahrt zugeordneten Endstellung verschwenkbar ist, wobei in den Endstellungen die erste Achse horizontal ist. Dies hat den Vorteil, dass wenigstens in einer bevorzugten Bewegungsrichtung das Stützrad geschleppt und dadurch wesentlich stabiler in dieser Laufrichtung gehalten und dadurch das Flattern unterdrückt wird, so dass andererseits der Abstand der ersten und der zweiten Achse und damit die Breite der erforderlichen Bewegungsbahn des Objekts ohne Beeinträchtigung der Laufruhe geringer gehalten werden kann als es bei einer starr gelagerten, im wesentlichen vertikal ausgerichteten Lenkachse möglich ist. Vorzugsweise kann dieser Vorteil aber auch für beide Bewegungsrichtungen genutzt werden, wenn in beiden Endstellungen der Stützradträger schräg abwärts verläuft.

Die zweckmäßige Ausgestaltung besteht dabei gerade darin, dass der Stützradträger um eine im wesentlichen horizontale, quer zur Bewegungsrichtung des Objekts verlaufende dritte Achse beweglich am Objekt gelagert ist. Dabei durchwandert der Aufstandspunkt des Stützrads relativ zum Objekt beim Wechsel der Endstellung einen Kreisbogen in einer vertikalen Ebene um diese dritte Achse, so dass die vom Stützrad getragene Last beim Wechsel der Bewegungsrichtung um die Pfeilhöhe dieses Bogens angehoben werden muss. Es ist deshalb eine andere vorteilhafte Ausgestaltung, dass der Stützradträger von einem am Objekt gelagerten Viergelenksystem getragen wird, an dessen Koppel der Stützradträger um die zweite Achse drehbeweglich gelagert ist, wodurch die Höhe reduzierbar ist, um die die Last angehoben werden muss.

Die Endstellungen können durch Anschläge definiert werden, die vorzugsweise einstellbar sind. Zweckmäßigerweise können die Anschläge mit einer Dämpfung versehen sein. In besonders zweckmäßiger Weise kann jedem Anschlag ein Energiespeicher zugeordnet sein. Dabei kann der Energiespeicher beispielsweise eine Feder, auch in Form einer Gasdruckfeder, sein.

Das Überwinden von Hindernissen durch das Stützrad wird wesentlich erleichtert durch eine besonders vorteilhafte Ausgestaltung, die sich dadurch auszeichnet, dass der Stützradträger aus zwei Abschnitten besteht, deren erster relativ zum Objekt um die zweite Achse beweglich ist, während der zweite Abschnitt, an dem das Stützrad gelagert ist, am ersten Abschnitt um eine vierte Achse drehbeweglich gelagert ist, die, bezogen auf die jeweilige Endstellung der zweiten Achse, mit einem Winkelabstand einerseits von der zweiten Achse und andererseits von der Aufstandsfläche der Stützanordnung in dem von der zweiten Achse und der Fahrspur des Stützrads eingeschlossenen Sektor verläuft, und dass der Bewegungsbereich zwischen dem ersten und dem zweiten Abschnitt durch Anschläge begrenzt ist.

Zweckmäßig sind dabei die Anschläge zur Begrenzung des Bewegungsbereichs zwischen beiden Abschnitten einstellbar.

Weist die Stützanordnung zwei auf einer gemeinsamen ersten Achse mit Abstand voneinander angeordnete Stützräder auf und ist der Stützradträger zwischen beiden Stützrädern mit der die Stützräder tragenden Radachse verbunden, kann der zweite Abschnitt des Stützradträgers aus zwei unter Einschluss eines stumpfen Winkels fest miteinander verbundenen Gelenkelementen bestehen, deren eines um die zweite Achse drehbeweglich mit dem ersten Abschnitt in Eingriff steht und deren anderes um die vierte Achse drehbeweglich mit einem die Radachse tragenden Element verbunden ist. Vorzugsweise sind dabei die Gelenkelemente Lagerzapfen und einstückig mit einander verbunden.

Eine besonders einfache und kostengünstige Ausführungsform löst die gestellte Aufgabe gemäß einem zweiten Lösungsgedanken bei einer Stützanordnung für ein mobiles Objekt mit einem Stützradträger, an dem um eine erste horizontale Achse lose drehbar ein Stützrad gelagert ist, das zur Veränderung seiner Laufrichtung gemeinsam mit dem Stützradträger um eine einen Abstand von der ersten Achse aufweisende und in einer die Stützradspur enthaltenden, vertikalen Ebene verlaufende zweite Achse gegenüber dem Objekt frei beweglich ist, dadurch, dass die zweite Achse unveränderlich senkrecht im Objekt angeordnet ist, dass der Stützradträger zwei das Stützrad zwischen sich aufnehmende Lagerschenkel aufweist, in deren jedem deckungsgleich einander gegenüberliegend in Bezug auf die zweite Achse in radialer Richtung verlaufende Führungsschlitze ausgeformt sind, in denen die erste Achse längsverschieblich geführt ist, wobei die erste Achse in den Führungsschlitzen längsverschieblich geführt ist zwischen einer ersten Endposition, in der die erste Achse einen grössten radialen Abstand von der zweiten Achse besitzt, und einer zweiten Endposition, in der die erste Achse einen geringsten Abstand von der zweiten Achse besitzt.

Um ein Verkanten des Achsbolzens relativ zu den beiden Führungsschlitzen auszuschließen und zugleich Reibungsverluste zu vermeiden, besteht dabei eine vorteilhafte Ausgestaltung darin, dass der Umfang des Achsbolzen in seinen in die Führungsschlitze eingreifenden Bereichen mit einer Verzahnung versehen ist, die in eine Zahnstangenverzahnung jeweils am oberen Rand eines jeden Führungsschlitzes eingreift.

Um die Last des Objekts unterstützend für die Rückstellung des Stützradträgers in die Schleppstellung nutzen zu können, ist es eine weitere zweckmäßige Gestaltung, daß die Führungsschlitze derart leicht schräg angeordnet sind, daß sie in Bezug auf die Lenkachse radial auswärts ansteigen.

### Kurze Beschreibung der Zeichnungen

Die Erfindung wird nachfolgend am Beispiel eines Pflugrahmens näher erläutert. Dabei zeigen die in den Zeichnungen dargestellter Ausführungsbeispiele der Erfindung in
- Fig. 1: eine Seitenansicht auf das hintere Ende eines mit einer ersten Ausführungsform der erfindungsgemäßen Stützanordnung versehenen Pflugrahmens bei Vorwärtsfahrt des Pfluges, wobei ein das Stützrad tragender Stützradträger um eine horizontale, quer zur Fahrtrichtung verlaufende Achse verschwenkbar am Pflugrahmen gelagert ist;
- Fig. 2: eine perspektivische Ansicht der mit dem Pflugrahmen verbundenen Baugruppe vor der Montage;
- Fig. 3: eine Ansicht von hinten auf den Pflugrahmen, den Radhalter und das Stützrad;
- Fig. 4: einen Schnitt nach der Linie IV-IV in Fig. 3;
- Fig. 5: eine vergrößerte Darstellung des in Fig. 4 mit V gekennzeichneten Details;
- Fig. 6: einen der Fig. 4 entsprechenden Schnitt bei Rückwärtsfahrt des Pfluges,
- Fig. 7: eine der Fig. 4 entsprechende Seitenansicht beim Übergang von der Vorwärtsfahrt zur Rückwärtsfahrt nach einer Schwenkbewegung des Stützrads um 90°,
- Fig.8: einen der Fig. 4 entsprechenden Schnitt unter Verwendung von Strömungsmittelzylindern,
- Fig. 9: eine der Fig. 1 entsprechende Seitenansicht einer Ausführungsform mit einem Viergelenk zur Verbindung zwischen dem Pflugrahmen und dem Stützradträger,
- Fig. 10: einen der Fig. 4 entsprechenden Schnitt durch die in Fig. 9 gezeigte Ausführungsform,
- Fig. 11: einen der Fig. 10 ähnlichen Schnitt bei Rückwärtsfahrt,
- Fig. 12: einen der Fig. 10 ähnlichen Schnitt durch eine weitere Ausführungsform mit einem durch eine Neigungsachse zweigeteilten Stützradträger,
- Fig. 13: eine perspektivische Ansicht auf die in Fig. 12 dargestellte Situation,
- Fig. 14: eine vergrößerte Ansicht auf das in Fig. 13 durch XIV gekennzeichnete Detail,
- Fig. 15: einen der Fig. 12 entsprechenden Schnitt bei Rückwärtsfahrt,
- Fig. 16: eine Seitenansicht der Ausführungsform nach Fig. 12 in einer Zwischenstellung des Stützradträgers während der Umstellung von Vorwärts- und Rückwärtsfahrt,
- Fig. 17: eine der Fig, 16 ähnliche Seiteansicht bei einer Neigung des Stützrads um die Neigungsachse,
- Fig. 18: eine Ansicht von hinten auf eine Ausführungsform mit Doppelrad,
- Fig. 19: einen Schnitt nach der Linie XIX-XIX in Fig. 18, eine Seitenansicht der Ausführungsform nach Fig. 12 in einer Zwischenstellung des Stützradträgers während der Umstellung von Vorwärts- und Rückwärtsfahrt,
- Fig. 20: eine vergrößerte Ansicht des in Fig. 19 durch XX gekennzeichneten Details,
- Fig. 21: eine vergrößerte Ansicht des in Fig. 19 durch XXI gekennzeichneten Details,
- Fig 22: eine Seitenansicht der Ausführungsform nach Fig. 18 in einer Zwischenstellung des Stützradträgers während der Umstellung von Vorwärts- und Rückwärtsfahrt,
- Fig. 23: eine Seitenansicht einer weiteren Ausführungsform einer erfindungsgemäßen Stützanordnung während einer Bewegung des Objekts nach rechts,
- Fig. 24: eine Ansicht von hinten auf die Ausführungsform nach Fig. 23 und
- Fig. 25: eine der Fig. 23 ähnliche Ansicht beim Übergang zwischen Vorwärts- und Rückwärtsfahrt.

### Beschreibung der Ausführungsbeispiele

Verschiedene einen ersten Lösungsgedanken realisierende Ausführungsformen der Erfindung werden am Beispiel eines nur durch das hintere Ende eines Pflugrahmens schematisch dargestellten Pfluges an sich bekannter Bauart näher erläutert, der das bewegliche Objekt 10 darstellt. Das vordere Ende eines solchen Pfluges stützt sich auf ein Fahrzeug, etwa einen Schlepper oder ein pflugeigenes Fahrgestell ab, während der hintere Bereich des die Pflugkörper tragende Rahmens über eine Stützanordnung der eingangs genannten Art abgestützt wird und damit den vorstehend geschilderten Problemen ausgesetzt ist, deren Überwindung die vorliegende Erfindung dient.

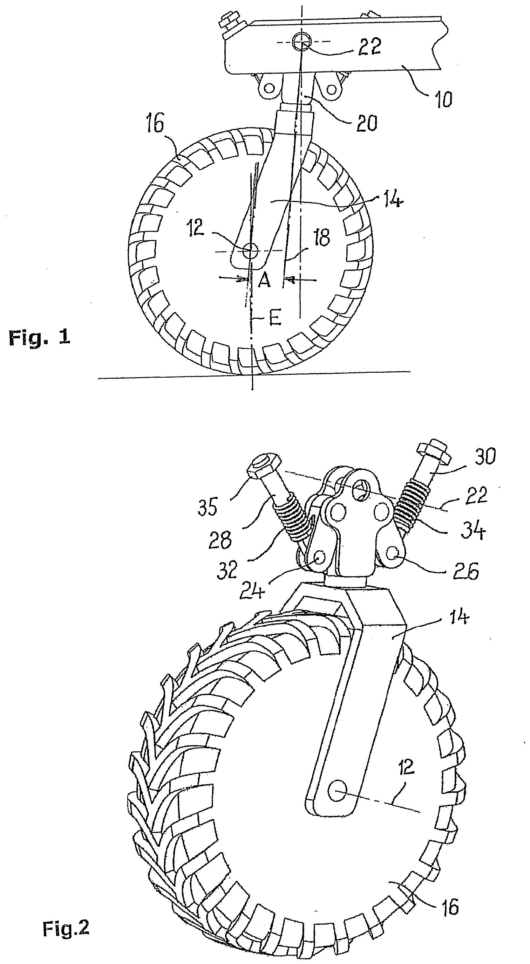

Zunächst werden anhand der Beschreibung einer ersten, in den Figuren 1 bis 7 dargestellten Ausführungsform der Erfindung die für die Funktionsweise der Stützanordnung wesentlichen Konstruktionsmerkmale benannt und erläutert. Hinsichtlich ihrer Funktion übereinstimmende Elemente der weiteren Ausführungsformen werden übereinstimmend bezeichnet.

Allen Ausführungsformen ist gemeinsam, daß die Stützanordnung mit wenigstens einem die abzustützende Last auf den Untergrund übertragenden, um eine quer zur Fahrtrichtung verlaufende, horizontale Radachse 12 (erste Achse) drehbar an einem Stützradträger 14 gelagerten Stützrad 16 versehen ist, wobei der Stützradträger 14 mit dem beweglichen Objekt 10 verbunden ist. Damit dieses Stützrad 16 sich auf die jeweils gewünschte Bewegungsrichtung des beweglichen Objekts einstellen kann, muß es bzw. der es tragende Stützradträger 14 um eine in einer im wesentlichen vertikalen, in der Bewegungsrichtung des Objekts ausgerichteten Ebene verlaufende Lenkachse 18 (zweite Achse) frei verschwenkbar sein. Damit das Stützrad 16 durch den zwischen Untergrund und Stützrad 16 wirkenden, der Bewegung des beweglichen Objekt entgegenwirkenden Widerstand um die Lenkachse 18 in die einen ruhigen Lauf ermöglichende Stellung gedrückt wird und ein Flattern des Stützrads 16 verhindert wird, muß zwischen der Radachse 12 und der Lenkachse 18 ein ausreichend großer Abstand A eingehalten werden, auf den später noch näher eingegangen wird. Mit anderen Worten, das Stützrad 16 wird von dem sich bewegenden Objekt 10, hier dem Pflugrahmen, um die Lenkachse 18 beweglich geschleppt.

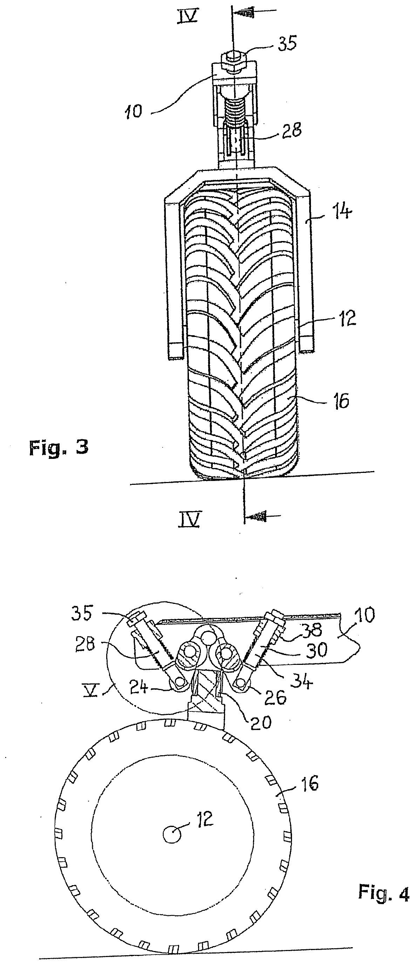

Bei bekannten Konstruktionen verläuft die Lenkachse im wesentlichen vertikal. Ändert das abzustützende Objekt seine Bewegungsrichtung um mehr als 90°, durchläuft das Stützrad 16 beim Bestreben, sich in die neue Bewegungsrichtung einzustellen, eine Position, in der es quer zur Bewegungsrichtung ausgerichtet ist und dabei geeignet ist, die Bewegung des Objekts zu hemmen Das durch den Rollwiderstand des Stützrads 16 auf dieses ausgeübte, um die Lenkachse 18 wirkende Richtmoment ist um so geringer, je kürzer der Abstand zwischen dem Radaufstandspunkt des Stützrads 16 und der Lenkachse 18 ist und um so mehr neigt das Rad zu einem unruhigen Lauf. Verlängert man diesen Abstand, so vergrößert sich auch die seitliche Verlagerung des Objekts 10 nach rechts öder links bei der Umkehrung der Bewegungsrichtung, so daß die Breite der für das Objekt 10 benötigten Bewegungsbahn zunimmt. Das ist besonders von Nachteil, wenn beispielsweise schwere Behälter oder Regale unter beengten Raumverhältnissen zu bewegen sind. Es ist ein besonderes Merkmal des ersten erfindungsgemäßen Lösungsgedankens, ein Rückstellmoment vorzusehen, das zumindest zusätzlich zu dem aus dem Rollwiderstand abgeleiteten Richtmoment eine wirkungsvollere Kraft zur Verfügung stellt, um dem Flattern des Stützrads 16 entgegenzuwirken und damit den genannten Achsabstand so gering wie möglich halten zu können. Dieser Gedanke wird dadurch umgesetzt, daß die Lenkachse 18 nicht senkrecht, sondern in einer sie enthaltenden, im wesentlichen vertikalen und in Bewegungsrichtung des Objekts 10 verlaufenden Ebene (deren Spur B in Fig. 3 mit der Schnittebene IV-IV übereinstimmt), das heißt gegenüber dem Untergrund, derart geneigt verläuft, daß sich die Lenkachse 18 entgegen der Bewegungsrichtung des Objekts 10 senkt (Fig. 1). Das hat die Wirkung, daß die vom Objekt 10 über den Stützradträger 14 auf das Stützrad 16 übertragene Last bestrebt ist, das Stützrad 16 derart relativ zur Lenkachse 18 zu verschwenken, daß die Lenkachse 18 mit dem größtmöglichen vertikalen Abstand unterhalb der Radachse 12 verläuft. (Wie man beispielsweise in Fig. 1 sieht, wird die ideelle Lenkachse 18 erst unterhalb des Zeichnungsbereichs eine durch die Radachse 12 gelegte Vertikalebene E durchstoßen.) Dadurch wird die Position des Stützrads 16 gegenüber der Lenkachse 18 stabilisiert und das Flattern des Stützrads 16 unterdrückt.

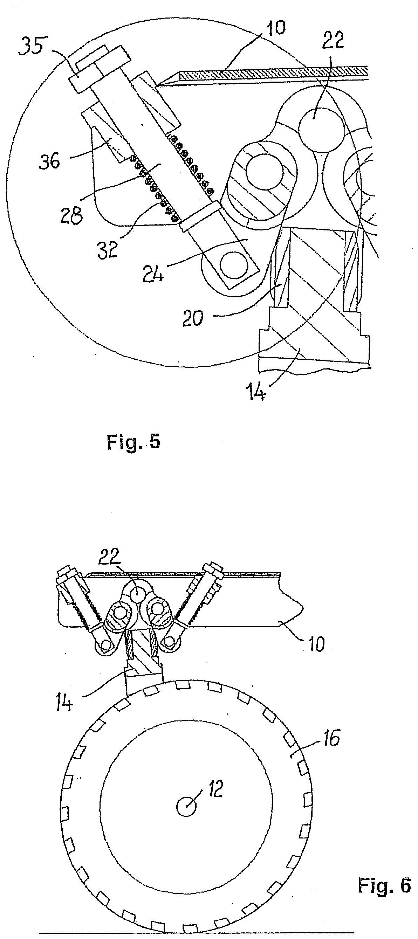

Wird die Bewegungsrichtung des Objekts 10 umgekehrt, das heißt, das Objekt rückwärts bewegt, wie es beispielsweise beim Wechseln der Fahrtrichtung des Pfluges im Vorgewende erforderlich ist, muß zur Beibehaltung des schleppenden Zustands bzw. der Geometrie der Stützanordnung, die Lenkachse 18 relativ zum Objekt 10 in entgegengesetzter Richtung geneigt verlaufen (Fig. 6). Es ist deshalb die Lenkachse 18 frei drehbar in einer Lagerhülse 20 gelagert, die ihrerseits gegenüber dem beweglichen Objekt 10 in der beschriebenen vertikalen Ebene B (Fig. 3) um eine horizontale und quer zur Bewegungsrichtung des Objekts 10 verlaufende Umschwenkachse (dritte Achse) zwischen einer der Vorwärtsbewegung des Objekts 10 zugeordneten Endstellung (Fig. 1) und einer der Rückwärtsfahrt zugeordneten Endstellung (Fig. 6) verschwenkbar ist.

Weil das Stützrad 16 - vorzugsweise in beiden Fahrtrichtungen - geschleppt werden soll, muß dazu die Lenkachse 18 unter Einhaltung des gewünschten Abstands A in Bezug auf die jeweilige Bewegungsrichtung vor der Radachse 12 verlaufen. Das wird durch die Lenkachse 18 ermöglicht.

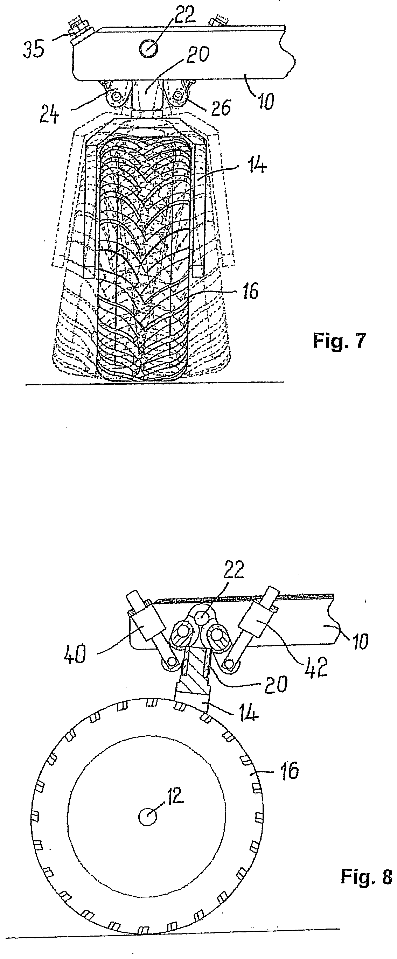

Die Umsteuerungsbewegung des Stützradträgers 14 zwischen seinen beiden der Vörwärtsfahrt und der Rückwärtsfahrt zugeordneten Endpositionen um die Umsteuerachse (dritte Achse) 22 wird anhand der Fig. 7 am Beispiel des Übergangs von der Vorwärtsbewegung zur Rückwärtsbewegung genauer erläutert, wobei die Fig. 7 in einer Seitenansicht in voll ausgezogenen Linien eine Mittelstellung des Stützradträgers zwischen den der Vorwärts- und der Rückwärtsfahrt zugeordneten Endstellungen zeigt. Nimmt man an, daß Vorwärtsfahrt in Fig. 7 von links nach rechts erfolgt, verläuft der geschleppte Stützradträger 14 schräg von rechts oben nach links unten. Wird die Bewegung des Objekts 10 umgekehrt, entfällt für das Stützrad 16 die ausrichtende Wirkung des Schleppvorgangs, das Stützrad wird instabil, und bei der geringsten Abweichung aus der Wirkungsrichtung der auf die Stützvorrichtung einwirkenden Schubkraft entsteht ein um die Lenkachse 18 wirkendes Drehmoment, das bestrebt ist, das Stützrad weiter in eine Position quer zur Fahrtrichtung zu verschwenken, die in unterbrochenen Linien auf der linken Seite der Fig. 7 dargestellt ist. Dadurch drückt die Schubkraft das Stützrad 16 entgegen der Bewegungsrichtung in Fig. 7 nach rechts und verschwenkt den Stützradträger 14 um die Umsteuerachse 22 entgegen dem Uhrzeigersinn bis in die ebenfalls in unterbrochenen Linien auf der rechten Seite die Fig. 7 dargestellte Endstellung, wobei der nun wieder geschleppte Stützradträger 14 mitsamt dem Stützrad 16 um die Lenkachse 18 verschwenkt wird und das Stützrad 16 in seine gewünschte Laufrichtung zurückkehrt.

Die Umsteuerungsbewegung des Stützradträgers 14 wird von zwei Verbindungslaschen 24 und 26 abgegriffen und auf verschiebbar am Objekt 10 geführte Bolzen 28 bzw. 30 übertragen, wobei die Verbindungslaschen 24 und 26 um jeweils zur Umsteuerachse 22 parallele Achsen beweglich einerseits mit der Lagerhülse 20 und andererseits mit dem zugeordneten Bolzen 28 bzw. 30 verbunden sind. Die Bolzen 28 bzw. 30 umschließende Druckfedern 32 und 34 stützen sich einerseits am jeweiligen Bolzen 28 bzw. 30 und andererseits an Führungen 36 bzw. 38 für die Bolzen 28 und 30 derart ab, daß sie die Umsteuerbewegung des Stützradträgers 14 dämpfen und die in der Endstellung gespeicherte Federenergie beim Wechsel der Bewegungsrichtung des Objekts 10 zur Unterstützung der Umsteuerbewegung freigeben. Das aus der zugeordneten Führung 36 bzw. 38 herausragende Ende eines jeden Bolzens 28 und 30 ist mit einem Gewinde versehen und trägt eine Mutter 35, durch die der mögliche Federweg einstellbar ist.

Anstelle der Bolzen 28 bzw. 30 und der Druckfedern 32 und 34 können auch Gasdruckfedern oder Hydraulikzylinder 40 und 42 verwendet werden, wie sie in Fig. 8 gezeigt sind. Dabei besteht die Möglichkeit, die Hydraulikzylinder 40 und 42 mit dem Hydrauliksystem eines Zugfahrzeugs bzw. einer Aushubvorrichtung derart zu verbinden, daß die gegen die Last des Objekts durchzuführende Umsteuerbewegung des Stützradträgers 14 nicht nur aus der auf das Objekt 10 übertragenen Zugkraft abgeleitet, sondern zusätzlich hydraulisch unterstützt wird.

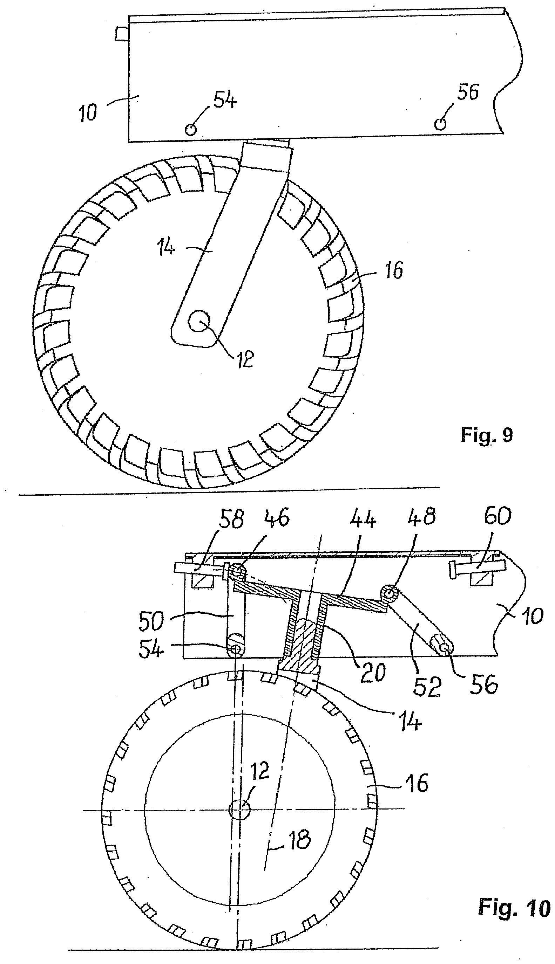

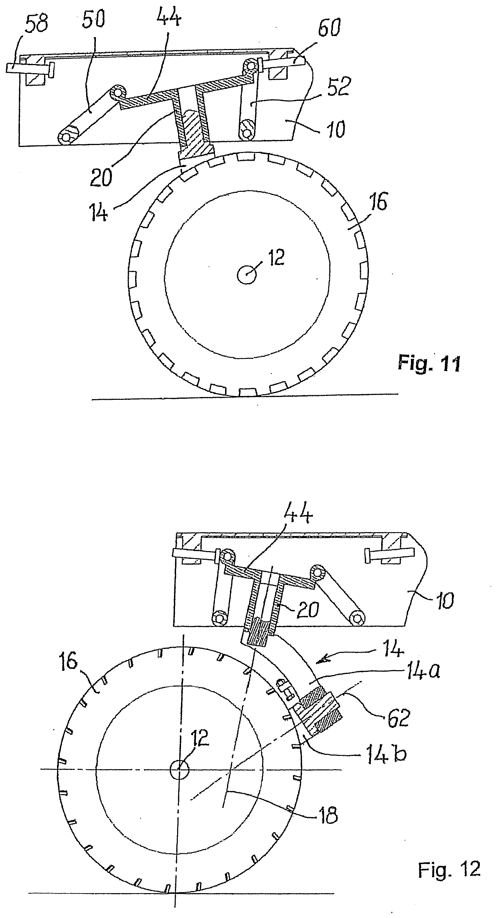

Abhängig vom Neigungswinkel der Lenkachse 18 und dem Abstand A wird beim Umschwenken des Stützrads 16 zwischen den der Vorwärtsfahrt und der Rückwärtsfahrt zugeordneten Positionen das bewegliche Objekt 10 angehoben. Um die Hubhöhe zu verringern, kann anstelle einer das Verschwenken der Lagerhülse 20 ermöglichenden Umsteuerachse 22 (Fig. 7) eine in den Figuren 10 und 11 näher dargestellte Lenkerkonstruktion verwendet werden. Dabei ist das obere Ende der Lagerhülse 20 mit einer rechtwinklig zur Lenkachse 18 und in Längsrichtung des Objekts 10 verlaufenden plattenförmigen Koppel 64 versehen die an ihren Längsenden über Gelenke 46 bzw. 48 mit Lenkern 50 und 52 verbunden ist, die ihrerseits um Achsen 54 bzw. 56 verschwenkbar am Objekt 10 gelagert sind, so daß das Objekt 10, die Lenker 50 und 52 und die Koppel 44 ein Gelenkviereck bilden, das es der Lagerhülse 20 gestattet, sich mit relativ geringer Vertikalbewegung zwischen ihren beiden Endpositionen zu verschwenken. Diese Endpositionen können durch am Objekt 10 angebrachte, verstellbare Anschläge 58 und 60 definiert werden.

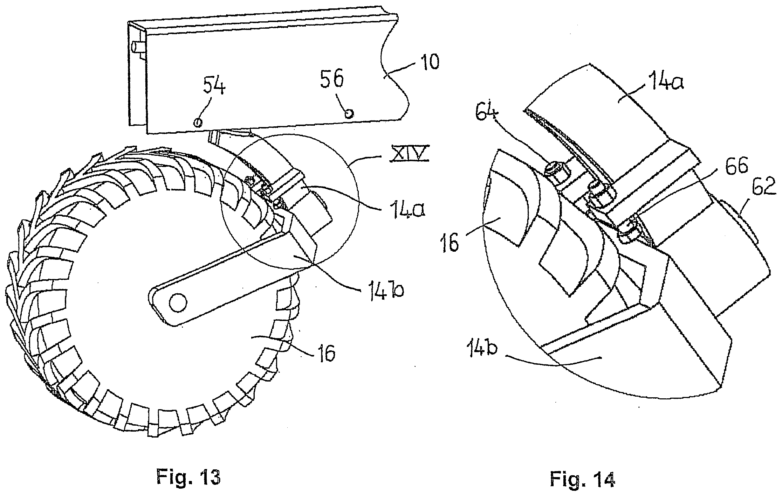

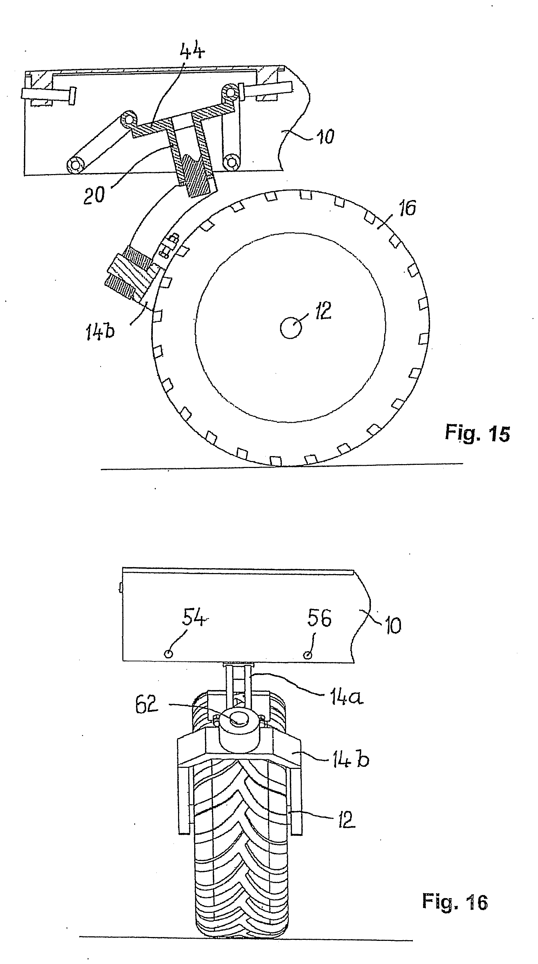

Insbesondere dann, wenn damit zu rechnen ist, daß das Stützrad 16 auf der vom Objekt zu befahrende Oberfläche auf seiner Bewegung einen deutlichen Widerstand entgegensetzende Hindernisse trifft, ist eine anhand der Figuren 12 bis 17 erläuterte Ausführungsform der Stützanordnung von Vorteil, bei der der Stützradträger 14 durch eine zusätzliche Neigungsachse 62 in zwei Abschnitte 14a und 14b unterteilt ist. Dabei ist der Abschnitt 14a als ein sich außerhalb des Stützradumfangs erstreckender Radialarm ausgebildet, der mit seinem einen Ende um die Lenkachse 18 beweglich in der Lagerhülse 20 gelagert ist und dadurch in der bereits beschriebenen Weise dem Stützrad 16 gestattet, entsprechend den auf das Stützrad 16 einwirkenden Kräften seine Laufrichtung zu verändern, während am anderen Ende um die mit der Lenkachse 18 in einer gemeinsamen Ebene, jedoch wesentlich flacher verlaufende Neigungsachse 62 beweglich der Abschnitt 14b gelagert ist, an dem um die Radachse 12 drehbar das Stützrad 16 gelagert ist. Auch die Neigungsachse 62 verläuft mit vertikalem Abstand unter der Radachse 12, so daß die vom Objekt 10 ausgehende Last bestrebt ist, das Stützrad 16 durch das Zusammenwirken der von der Lenkachse 18 und die Neigungsachse 62 gegebenen Bewegungsmöglichkeiten stabil zu halten. Die Bewegung des gabelförmigen Abschnitts 14b wird durch deutlich in Fig. 14 erkennbare, einstellbare, am Abschnitt 14a angebrachte und mit dem Abschnitt 14b zusammenwirkende Anschlagschrauben 64 und 66 begrenzt.

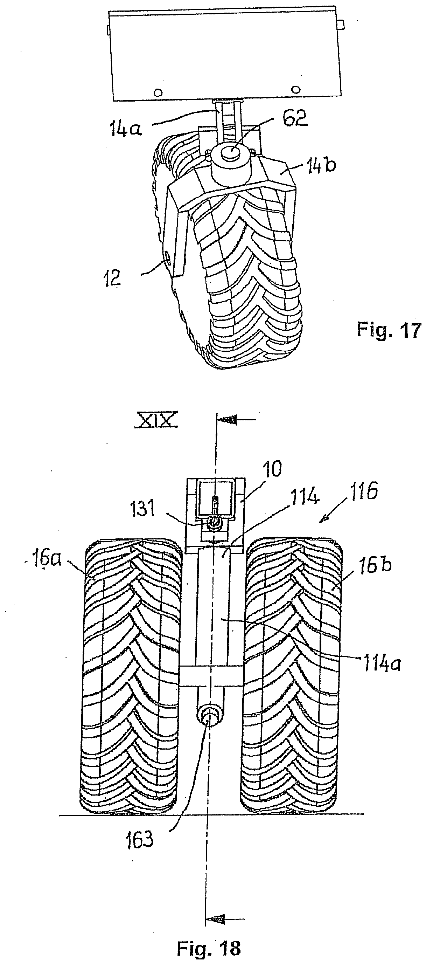

Trifft das Stützrad 16 auf ein Hindernis, entstehen Drehmomente um die Lenkachse 18 und die Neigungsachse 62, wodurch sich das Stützrad, wie in Fig. 17 dargestellt, um die Neigungsachse 62 neigt und zugleich seine Laufrichtung verändert, bis das Stützrad 16 das Hindernis überklettert, der Widerstand beendet ist und das Stützrad 16 wieder in seine normale Stellung zurückkehrt. Durch die dem Stützrad 16 gewährte Möglichkeit, dem Hindernis in der beschriebenen Weise auszuweichen und es dadurch zu überwinden, ergibt sich eine wesentliche Verbesserung der Laufruhe der Stützanordnung.

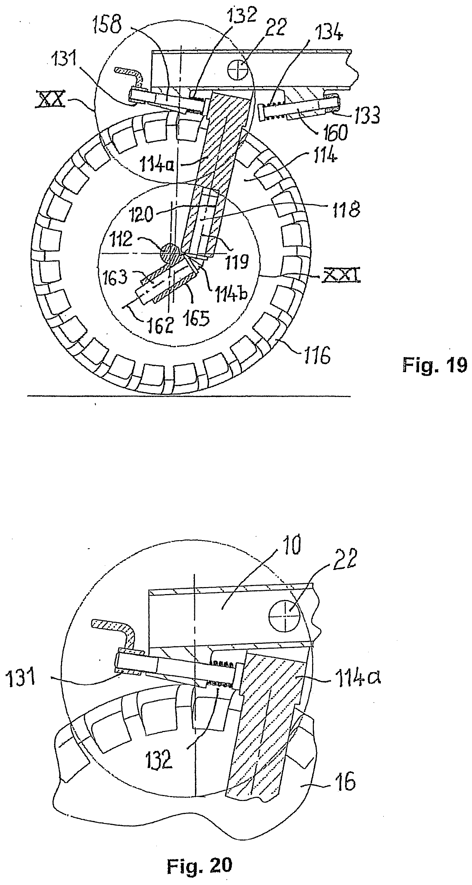

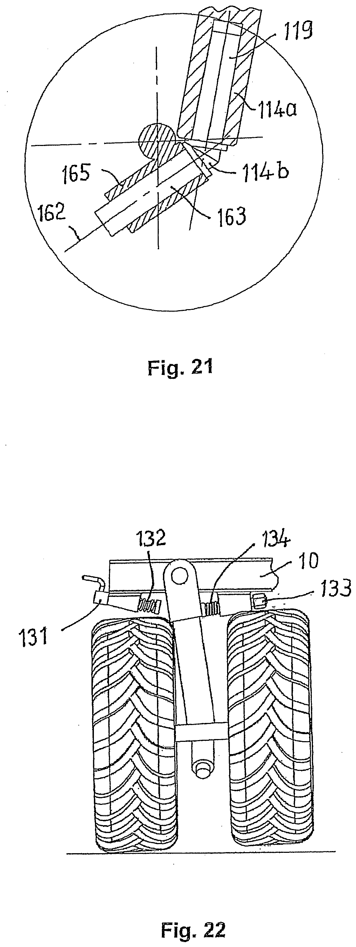

Die Vorteile dieser Ausführungsform können auch bei einer Ausführungsform mit doppeltem Stützrad 116 genutzt werden, die in den Figuren 18 bis 22 dargestellt ist. Weil dabei der Stützradträger 114 zwischen die beiden Stützräder 16a und 16b eingreifen kann, ist der außerhalb des Stützradumfangs verlaufende, als Radialarm ausgebildete Abschnitt 14b des Stützradträgers 14 entbehrlich und die Konstruktion des Stützradträgers 114 kann entsprechend vereinfacht werden. Die Endstellungen des Stützradträgers 114 werden auch hier durch verstellbare Anschläge 158 und 160 definiert, wobei in diesem Falle angenommen wird, daß bei der der Vorwärtsfahrt des Objekts 10 zugeordneten Endstellung des Objekts entsprechend den jeweiligen Einsatzbedingungen relativ häufig der Wunsch besteht, die Winkelstellung des Stützradträgers neu zu justieren. Deshalb ist die dem Anschlag 158 zugeordnete Mutter zur Erleichterung ihrer Verstellung als Kurbel mit einem Handgriff ausgebildet, während der Anschlag 160 für die Rückwärtsfahrt mit einer einfachen Mutter versehen ist, da dieser Anschlag allenfalls selten verstellt werden wird.

Bei dieser Ausführungsform wird generell auch die Lagerhülse 20 der oben beschriebenen Ausführungsformen entbehrlich, weil der Stützradträger 114 direkt um die Umsteuerachse 22 verschwenkbar am Objekt 10 angebracht ist. Die Lenkachse 118 wird dabei durch eine Lagerbohrung 120 am unteren Ende eines ersten Abschnitts 114a des Stützradträgers 114 und einen in dieser gelagerten Lagerzapfen 119 an einem zweiten Abschnitt 114b des Stützradträgers 114 definiert. Dieser zweite Abschnitt 114b besteht im wesentlichen aus zwei miteinander zu einem Teil verbundenen Lagerzapfen 119 und 163. die miteinander etwa den gleichen Winkel einschließen, wie bei der vorher beschriebenen Ausführungsform die Lenkachse 18 und die Neigungsachse 62. Der Lagerzapfen 163 und eine auf frei drehbeweglich gelagerte Hülse 165 definieren die Neigungsachse 162. Die Radachse 112 ist in einem Stück mit dem zweiten Abschnitt 114b ausgebildet und trägt darauf lose drehbar die beiden Stützräder 16a und 16b. Die Funktionsweise dieser Ausführungsform entspricht der der vorher geschilderte Ausführungsform mit einem Stützrad 16.

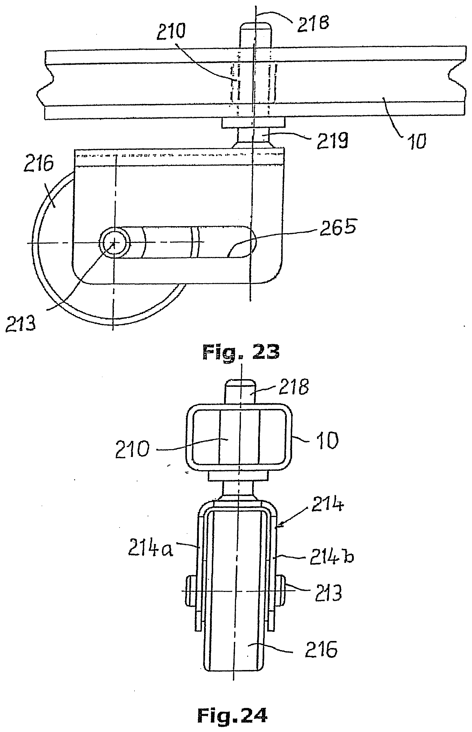

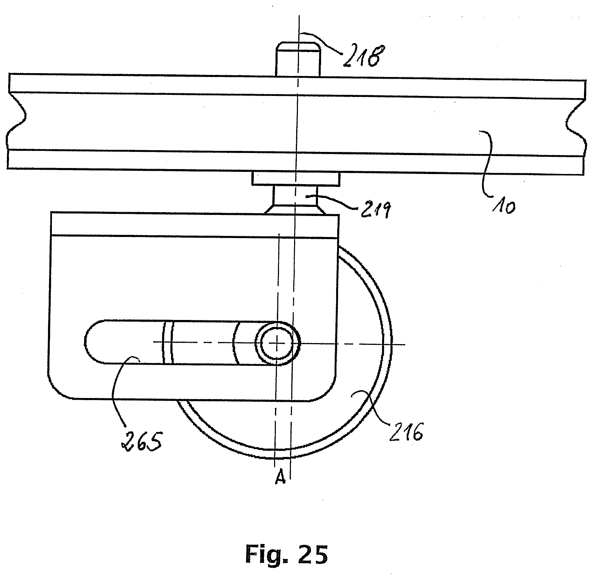

Anhand der folgenden Beschreibung der in den Figuren 23 bis 25 dargestellten Ausführungsform wird ein zweiter erfindungsgemäßer Weg beschrieben, der zur Lösung der Aufgabe dient, eine Stützanordnung derart auszugestalten, daß einerseits der Abstand zwischen der ersten und der zweiten Achse, d.h. der Lenkachse und der Radachse, beim Wechsel der Bewegungsrichtung des abzustützenden Objekts möglichst gering ist und damit eine möglichst geringe seitliche Verlagerung des Objekts bei der Umkehrung der Bewegungsrichtung eingehalten werden kann, und daß andererseits der Abstand beider Achsen groß genug ist, um bei der Vorwärts- oder Rückwärtsbewegung einen flatterfreien Lauf des Stützrads zu gewährleisten. Der bei dieser Ausführungsform gewählte Lösungsweg unterscheidet sich von den oben beschriebenen Ausführungsformen durch eine besonders kostengünstige Gestaltung, bei der der zwischen zwei der Vorwärtsbewegung und der Rückwärtsbewegung zugeordneten Stellungen umschwenkbare Stützradträger 14 mit einer gegenüber der befahrenen Oberfläche geneigten Lenkachse 18 entfällt. Bei dieser Ausführungsform ist eine Lenkachse 218 wie beim Stand der Technik unveränderlich vertikal im beweglichen Objekt 10 angeordnet. gelagert. Ein im Querschnitt gabelförmiger, sich nach unten öffnender Stützradträger 214 weist einen Lagerzapfen 219 auf, der um die Lenkaachse 218 drehbeweglich im Objekt 10 gelagert ist. Der Stützradträger 214 weist zwei zueinander parallel und in Bezug auf die Lenkachse 218 radial verlaufende Lagerschenkel 214a und 214b auf, in denen zueinander deckungsgleich angeordnete Führungsschlitze 265 ausgebildet sind. Ein lose drehbar ein Stützrad 216 tragender Achsbolzen 213 greift in die beiden Führungsschlitze 265 ein und ist zwischen einer ersten Endposition (Fig. 23), in der er den größten radialen Abstand von der Lenkachse 218 besitzt, und einer zweiten Endposition (Fig. 25), in der er den geringsten Abstand von der Lenkachse 218 besitzt, beweglich. Die in Fig. 23 gezeigte Stellung nimmt der Achsbolzen 213 ein, wenn sich das Objekt, sei es bei der Vorwärtsbewegung, sei es bei der Rückwärtsbewegung, in der Zeichnung nach rechts bewegt. Wird die Bewegungsrichtung umgekehrt, d.h. die Wirkungsrichtung der das Objekt bewegenden Kraft umgekehrt, entfällt die Kraft, die den Stützradträger 214 in der geschleppten Position stabilisiert und den Achsbolzen 213 in die von der Lenkachse 218 entfernt gelegene Endstellung drückt, und wird durch eine entgegengesetzt gerichtete Kraft ersetzt, die - wie in Fig. 25 gezeigt - den Achsbolzen 213 in die unmittelbare Nähe der Lenkachse 218 schiebt. In dieser Position ist das Stützrad 216 nicht mehr stabil geführt. Sobald die Laufrichtung des Stützrads 216 nur im Geringsten von der Wirkungsrichtung der Kraft abweicht, entsteht ein Drehmoment, das bestrebt ist, den Stützradträger 214 um die Lenkachse 218 zu verschwenken und das sich verstärkt, bis das Stützrad 216 quer zur beabsichtigten Bewegungsrichtung steht, und dann wieder abnimmt. Als Ergebnis wird der Stützradträger 214 umgeschwenkt, bis er die der neuen Bewegungsrichtung entsprechende Schleppstellung einnimmt, wobei der Achsbolzen 213 sich in den Führungsschlitzen wieder in die von der Lenkachse 218 entfernte Endstellung verschieben wird. Während der Schwenkbewegung liegt der Radaufstandspunkt so nahe bei der Lenkachse 218, daß nur eine, in Fig. 25 mit A gekennzeichnete, praktisch vernachlässigbare seitliche Verlagerung des Objekts 10 beim Wechsel der Bewegungsrichtung des Objekts 10 auftritt, während andererseits bei der Bewegung des Objekts 10 in der neuen Bewegungsrichtung sofort wieder die stabilisierende, für Laufruhe sorgende Wirkung der in Fig. 24 gezeigten Schleppstellung eintritt.

Um ein Verkanten des Achsbolzens 213 relativ zu den beiden Führungsschlitzen 65 auszuschließen und zugleich Reibungsverluste zu vermeiden, kann der Achsbolzen 213 in seinen in die Führungsschlitze 265 eingreifenden Bereichen mit einer (nicht dargestellten) Verzahnung, beispielsweise durch Zahnkränze, versehen sein, die in eine (nicht dargestellte) Zahnstangenverzahnung jeweils am oberen Rand eines jeden Führungsschlitzes eingreift, so daß sich der Achsbolzen 213 während seiner Bewegung in den Führungsschlitzen 265 zu sich selbst parallel bleibend am verzahnten Rand der Führungsschlitze 265 abwälzt.

Soll die Last des Objekts 10 unterstützend für die Rückstellung des Stützradträgers 214 in die in Fig. 23 gezeigte Schleppstellung genutzt werden, können in einer nicht dargestellten Weise die Führungsschlitze 265 derart leicht schräg angeordnet werden, daß sie in Bezug auf die Lenkachse 218 radial auswärts ansteigen.

Gegenüber dem Stand der Technik, in dem das Stützrad zwei Freiheitsgrade besitzt, sieht die vorliegende Erfindung zumindest drei, und mit der Anwendung der Neigungsachse sogar vier Freiheitsgrade vor. Das Stützrad hat somit die Möglichkeit, bei der Überwindung eines Widerstands im in erster Linie im Bereich des Freiheitsgrads auszuweichen, der den geringsten Kraftaufwand erfordert.

## Patentansprüche

1. Stützanordnung für ein mobiles Objekt (10), mit einem Stützradträger (14), an dem um eine erste horizontale Achse (12) lose drehbar ein Stützrad (16) gelagert ist, wobei die Stützanordnung so an einem mobilen Objekt anbringbar ist, dass zur Veränderung der Laufrichtung des Stützrades (16) es gemeinsam mit dem Stützradträger (14) um eine einen Abstand von der ersten Achse aufweisende und in einer die Fortbewegungsrichtung des Objekts (10) enthaltenden, vertikalen Ebene verlaufende zweite Achse (18) gegenüber dem Objekt (10) frei beweglich ist, wobei der Stützradträger (14) zwischen zwei definierten Endstellungen verschwenkbar derart am Objekt (10) lagerbar ist, dass zumindest in einer dieser beiden Endstellungen der Stützradträger (14) schräg abwärts verläuft, **dadurch gekennzeichnet, dass** dies realisiert ist, indem der Stützradträger (14) mit einer Lenkachse (18) als zweite Achse (18) verbunden ist, wobei die Lenkachse (18) frei drehbar in einer Lagerhülse (20) gelagert ist oder durch eine Lagerbohrung (120) und einen frei drehbar in der Lagerbohrung (120) gelagerten Lagerzapfen (119) ausgebildet ist, wobei die Lagerhülse (20) bzw. die Lagerbohrung (120) ihrerseits gegenüber dem mobilen Objekt (10) in der vertikalen Ebene um eine horizontale und quer zur Bewegungsrichtung des Objekts (10) verlaufenden dritten Achse zwischen einer der Vorwärtsbewegung des Objekts (10) zugeordneten Endstellung und einer der Rückwärtsfahrt zugeordneten Endstellung verschwenkbar ist.

2. Stützanordnung nach Anspruch 1, **dadurch gekennzeichnet, dass** in beiden Endstellungen der Stützradträger (14) jeweils in entgegengesetzter Richtung schräg abwärts verläuft.

3. Stützanordnung nach einem der vorhergehenden Ansprüche, **dadurch gekennzeichnet, dass** der Stützradträger (14) von einem am Objekt (10) gelagerten Viergelenksystem getragen wird, an dessen Koppel (44) der Stützradträger (14) um die zweite Achse (18) drehbeweglich gelagert ist.

4. Stützanordnung nach einem der vorhergehenden Ansprüche, **dadurch gekennzeichnet, dass** die Endstellungen durch insbesondere einstellbare Anschläge (58, 60) definiert werden.

5. Stützanordnung nach einem der Ansprüche 3 oder 4, **dadurch gekennzeichnet, dass** die Anschläge (58, 60) mit einer Dämpfung (32, 34; 40,42) versehen sind.

6. Stützanordnung nach einem der Ansprüche 3 bis 5, **dadurch gekennzeichnet, dass** jedem Anschlag ein Energiespeicher (32, 34; 40, 42), insbesondere in Form einer Feder, vorzugsweise Gasdruckfeder, zugeordnet ist.

7. Stützanordnung nach einem der Ansprüche 1 bis 6, **dadurch gekennzeichnet, dass** der Stützradträger (14) aus zwei Abschnitten (14a, 14b) besteht, deren erster (14a) relativ zum Objekt (10) um die zweite Achse (18) beweglich ist, während der zweite Abschnitt (14b), an dem das Stützrad (16) gelagert ist, am ersten Abschnitt (14a) um eine vierte Achse (62) drehbeweglich gelagert ist, die, bezogen auf die jeweilige Endstellung der zweiten Achse (18), mit einem Winkelabstand einerseits von der zweiten Achse (18) und andererseits von der Aufstandsfläche der Stützanordnung in dem von der zweiten Achse (18) und der Fahrspur des Stützrads (16) eingeschlossenen Sektor verläuft, und dass der Bewegungsbereich zwischen dem ersten und dem zweiten Abschnitt (14a, 14b) durch Anschläge (66) begrenzt ist.

8. Stützanordnung nach Anspruch 7, **dadurch gekennzeichnet, dass** die Anschläge (64, 66) zur Begrenzung des Bewegungsbereichs zwischen beiden Abschnitten (14a, 14b) einstellbar sind.

9. Stützanordnung nach einem der Ansprüche 7 oder 8, **dadurch gekennzeichnet, dass** der zweite Abschnitt (14b) das Stützrad (16) gabelförmig umfasst.

10. Stützanordnung nach einem der Ansprüche 1 bis 8, **dadurch gekennzeichnet, dass** sie zwei auf einer gemeinsamen ersten Achse (112) mit Abstand voneinander angeordnete Stützräder (16a, 16b) aufweist und der Stützradträger (114) zwischen beiden Stützrädern (16a, 16b) mit der die Stützräder tragenden Radachse (112) verbunden ist.

11. Stützanordnung nach einem der Ansprüche 7 oder 8 und Anspruch 10, **dadurch gekennzeichnet, dass** der zweite Abschnitt (114a) des Stützradträgers (114) aus zwei unter Einschluss eines stumpfen Winkels fest miteinander verbundenen Gelenkelementen (119, 163) besteht, deren eines um die zweite Achse (118) drehbeweglich mit dem ersten Abschnitt (114a) in Eingriff steht und deren anderes um die vierte Achse (62) drehbeweglich mit einem die Radachse (112) tragenden Element (165) verbunden ist.

12. Eine Stützanordnung für ein mobiles Objekt (10), mit einem Stützradträger (214), an dem um eine erste horizontale Achse (212) lose drehbar ein Stützrad (216) gelagert ist, wobei die Stützanordnung so an einem mobilen Objekt anbringbar ist, dass zur Veränderung der Laufrichtung des Stützrades (16) es gemeinsam mit dem Stützradträger (214) um eine einen Abstand von der ersten Achse aufweisende und in einer die Stützradspur enthaltenden, vertikalen Ebene verlaufende zweite Achse (218) gegenüber dem Objekt (10) frei beweglich ist, wobei die zweite Achse (218) unveränderlich senkrecht im Objekt anordenbar ist, wobei der Stützradträger (214) zwei das Stützrad (216) zwischen sich aufnehmende Lagerschenkel (214a und 214b) aufweist, in deren jedem deckungsgleich einander gegenüberliegend in Bezug auf die zweite Achse (218) in radialer Richtung verlaufende Führungsschlitze (265) ausgeformt sind, **dadurch gekennzeichnet, dass** die erste Achse (212) in den Führungsschlitzen (265) längsverschieblich geführt ist zwischen einer ersten Endposition, in der die erste Achse (212) einen grössten radialen Abstand von der zweiten Achse (218) besitzt, und einer zweiten Endposition, in der die erste Achse (212) einen geringsten Abstand von der zweiten Achse (218) besitzt.

13. Stützanordnung nach Anspruch 12, **dadurch gekennzeichnet, dass** der Umfang des Achsbolzen (213) in seinen in die Führungsschlitze (265) eingreifenden Bereichen mit einer Verzahnung versehen ist, die in eine Zahnstangenverzahnung jeweils am oberen Rand eines jeden Führungsschlitzes eingreift.

14. Stützanordnung nach einem der Ansprüche 12 oder 13, **dadurch gekennzeichnet, dass** die Führungsschlitze (265) derart leicht schräg angeordnet sind, dass sie in Bezug auf die Lenkachse (218) radial auswärts ansteigen.

## Claims

1. Support assembly for a mobile object (10), with a support wheel carrier (14) on which a support wheel (16) is loosely rotatably mounted about a first horizontal axis (12), wherein the support assembly is attachable to a mobile object such that for changing the running direction of the support wheel (16) it, together with the support wheel carrier (14), is freely movable relative to the object (10) about a second axis (18) having a gap from the first axis and extending in a vertical plane containing the direction of movement of the object (10), wherein the support wheel carrier (14) can be pivotably mounted between two defined end positions on the object (10) in such a manner that in at least one of these two end positions the support wheel carrier (14) extends obliquely downwards, **characterised in that** this is realised **in that** the support wheel carrier (14) is connected to a steering axle (18) as the second axis (18), wherein the steering axle (18) is freely rotatably mounted in a bearing sleeve (20) or is formed by a bearing bore (120) and a bearing journal (119) mounted freely rotatably in said bearing bore (120), wherein the bearing sleeve (20) or the bearing bore (120) for its part is pivotable relative to the mobile object (10) in the vertical plane about a third axis extending horizontally and transversely to the direction of movement of said object (10) between an end position associated with the forward movement of the object (10) and an end position associated with the reverse travel.

2. Support assembly according to claim 1, **characterised in that** in both end positions the support wheel carrier (14) extends in each case obliquely downwards in the opposite direction.

3. Support assembly according to one of the preceding claims, **characterised in that** the support wheel carrier (14) is supported by a four-bar linkage system mounted on the object (10), on the coupler (44) of which linkage system the support wheel carrier (14) is rotatably mounted about the second axis (18).

4. Support assembly according to one of the preceding claims, **characterised in that** the end positions are defined by in particular adjustable stops (58, 60).

5. Support assembly according to one of claims 3 or 4, **characterised in that** the stops (58, 60) are provided with a damping (32, 34; 40, 42).

6. Support assembly according to one of claims 3 to 5, **characterised in that** each stop is associated with an energy store (32, 34; 40, 42), in particular in the shape of a spring, preferably a gas pressure spring.

7. Support assembly according to one of claims 1 to 6, **characterised in that** the support wheel carrier (14) consists of two sections (14a, 14b), the first of which (14a) is movable relative to the object (10) about the second axis (18), while the second section (14b), on which the support wheel (16) is mounted, is rotatably mounted on the first section (14a) about a fourth axis (62) which, in relation to the respective end position of the second axis (18), extends with an angular distance on the one hand from the second axis (18) and on the other hand from the contact area of the support assembly in the sector included by the second axis (18) and the track of the support wheel (16), and that the range of movement between the first and the second section (14a, 14b) is limited by stops (66).

8. Support assembly according to claim 7, **characterised in that** the stops (64, 66) are adjustable for limiting the range of movement between both sections (14a, 14b).

9. Support assembly according to one of claims 7 or 8, **characterised in that** the second section (14b) encloses the support wheel (16) in the shape of a fork.

10. Support assembly according to one of claims 1 to 8, **characterised in that** it has two support wheels (16a, 16b) spaced apart from each other arranged on a common first axis (112) and the support wheel carrier (114) between the two support wheels (16a, 16b) is connected to the wheel axle (112) carrying the support wheels.

11. Support assembly according to one of claims 7 or 8 and claim 10, **characterised in that** the second section (114a) of the support wheel carrier (114) consists of two articulation elements (119, 163) firmly connected to each other at an obtuse angle, one of which elements is rotatably engaged with the first section (114a) about the second axis (118) and the other of which is rotatably connected about the fourth axis (62) to an element (165) supporting the wheel axle (112).

12. A support assembly for a mobile object (10), with a support wheel carrier (214) on which a support wheel (216) is loosely rotatably mounted about a first horizontal axis (212), wherein the support assembly is attachable to a mobile object such that for changing the running direction of the support wheel (16) it is freely movable, together with the support wheel carrier (214), relative to the object (10) about a second axis (218) having a gap from the first axis and extending in a vertical plane containing the support wheel track, wherein the second axis (218) can be arranged vertically in the object in such a way that it cannot be changed, wherein the support wheel carrier (214) has two bearing journals (214a and 214b) receiving the support wheel (216) between them, in each of which journals guiding slots (265) are formed, said slots being congruent with each other with respect to the second axis (218) and extending in the radial direction,
**characterised in that** the first axis (212) is guided in the guiding slots (265) so as to be longitudinally displaceable between a first end position, in which the first axis (212) has a greatest radial distance from the second axis (218), and a second end position, in which the first axis (212) has a smallest distance from the second axis (218).

13. Support assembly according to claim 12, **characterised in that** the circumference of the axle pin (213) is provided in its portions engaging in the guiding slots (265) with a toothing which engages in a rack toothing at the upper edge of each guiding slot respectively.

14. Support assembly according to one of claims 12 or 13, **characterised in that** the guiding slots (265) are arranged slightly obliquely in such a way that they rise radially outwards with respect to the steering axle (218).

## Revendications

1. Dispositif de soutien pour un objet mobile (10), avec un support de roue porteuse (14), au niveau duquel est logée, de manière librement rotative autour d'un premier axe horizontal (12), une roue porteuse (16), le dispositif de soutien pouvant être monté sur un objet mobile de façon à ce que, pour la modification de la direction de déplacement de la roue porteuse (16), il soit mobile librement, conjointement avec le support de roue porteuse (14), autour d'un deuxième axe (18), présentant une distance par rapport au premier axe et s'étendant dans un plan vertical contenant la direction de déplacement de l'objet (10), par rapport à l'objet (10), le support de roue porteuse (14) pouvant être logé sur l'objet (10) de manière pivotante entre deux positions finales définies de façon à ce qu'au moins dans une de ces deux positions finales, le support de roue porteuse (14) s'étende en oblique vers le bas, **caractérisé en ce que** cela est réalisé en reliant le support de roue porteuse (14) avec un axe de direction (18) en tant que deuxième axe (18), l'axe de direction (18) étant logé de manière librement rotative dans une douille de palier (20) ou étant constitué d'un perçage de palier (120) et d'un tourillon de palier (119) logé de manière librement rotative dans le perçage de palier (120), la douille de palier (20) ou le perçage de palier (120) étant, de son côté, pivotant par rapport à l'objet mobile (10) dans le plan vertical autour d'un troisième axe horizontal s'étendant transversalement par rapport à la direction de déplacement de l'objet (10), entre une position finale attribuée au déplacement vers l'avant de l'objet (10) et une position finale attribuée à la marche arrière.

2. Dispositif de soutien selon la revendication 1, **caractérisé en ce que**, dans les deux positions finales, le support de roue porteuse (14) s'étend en oblique vers le bas dans des directions respectives opposées.

3. Dispositif de soutien selon l'une des revendications précédentes, **caractérisé en ce que** le support de roue porteuse (14) est supporté par un système à quatre articulations logé sur l'objet (10), sur le couplage (44) duquel le support de roue porteuse (14) est logé de manière rotative autour du deuxième axe (18).

4. Dispositif de soutien selon l'une des revendications précédentes, **caractérisé en ce que** les positions finales sont définies par des butées (58, 60), plus particulièrement réglables.

5. Dispositif de soutien selon l'une des revendications 3 ou 4, **caractérisé en ce que** les butées (58, 60) sont munies d'un amortissement (32, 34 ; 40, 42).

6. Dispositif de soutien selon l'une des revendications 3 à 5, **caractérisé en ce que**, à chaque butée correspond un accumulateur d'énergie (32, 34 ; 40, 42), plus particulièrement sous la forme d'un ressort, de préférence un ressort de compression à gaz.

7. Dispositif de soutien selon l'une des revendications 1 à 6, **caractérisé en ce que** le support de roue porteuse (14) est constitué de deux portions (14a, 14b), la première (14a) étant mobile par rapport à l'objet (10) autour du deuxième axe (18), tandis que la deuxième portion (14b), sur laquelle la roue porteuse (16) est logée, est logée sur la première portion (14a) de manière rotative autour d'un quatrième axe (62), qui s'étend, par rapport à la position finale respective du deuxième axe (18), avec une distance axiale d'une part du deuxième axe (18) et d'autre part de la surface de support du dispositif de soutien dans le secteur délimité par le deuxième axe (18) et la voie de circulation de la roue de soutien (16), et **en ce que** la zone de mouvement est délimitée, entre la première et la deuxième portions (14a, 14b) par des butées (66).

8. Dispositif de soutien selon la revendication 7, **caractérisé en ce que** les butées (64, 66) sont réglables pour la limitation de la zone de déplacement entre les deux portions (14a, 14b).

9. Dispositif de soutien selon l'une des revendications 7 ou 8, **caractérisé en ce que** la deuxième portion (14b) entoure la roue porteuse (16) à la manière d'une fourche.

10. Dispositif de soutien selon l'une des revendications 1 à 8, **caractérisé en ce qu'**il comprend deux roues porteuses (16a, 16b) disposées avec une distance entre elles sur un premier axe (112) commun, et le support de roue porteuse (114) est relié, entre les deux roues porteuses (16a, 16b), avec l'axe de roue (112) supportant les roues porteuses.

11. Dispositif de soutien selon l'une des revendications 7 ou 8 et la revendication 10, **caractérisé en ce que** la deuxième portion (114a) du support de roue porteuse (114) est constituée de deux éléments d'articulation (119, 163), reliés fermement entre eux en formant un angle obtus, dont un est en prise, de manière mobile autour du deuxième axe (118), avec la première portion (114a) et l'autre est relié, de manière mobile autour du quatrième axe (62), avec un élément (165) supportant l'axe de roue (112).

12. Dispositif de soutien pour un objet mobile (10), avec un support de roue porteuse (214), sur lequel est logé, de manière librement rotative autour d'un premier axe horizontal (212), une roue porteuse (216), le dispositif de soutien pouvant être monté sur un objet mobile de façon à ce que, pour la modification de la direction de déplacement de la roue porteuse (16), il soit librement rotatif, conjointement avec le support de roue porteuse (214), autour d'un deuxième axe (218) présentant une distance par rapport au premier axe et s'étendant dans un plan vertical contenant la voie de roulement de la roue porteuse, par rapport à l'objet (10), le deuxième axe (218) pouvant être disposé de manière invariable perpendiculairement dans l'objet, le support de roue porteuse (214) comprenant deux branches de palier (214a et 214b) accueillant entre elles la roue porteuse (214) et dans chacune desquelles sont formées des fentes de guidage (265) s'étendant dans la direction radiale et coïncidant entre elles de manière opposée par rapport au deuxième axe (218), **caractérisé en ce que** le premier axe (212) est guidé de manière coulissante longitudinalement dans les fentes de guidage (265), entre une première position finale, dans laquelle le premier axe (212) présente la distance radiale la plus importante par rapport au deuxième axe (218) et, dans une deuxième position finale, dans laquelle le premier axe (212) présente la distance radiale la moins importante par rapport au deuxième axe (218).

13. Dispositif de soutien selon la revendication 12, **caractérisé en ce que** la circonférence de la tige d'axe (213) est munie de parties s'emboîtant dans les fentes de guidage (265) avec une denture qui s'emboîte dans une denture de crémaillère sur un bord supérieur de chaque fente de guidage.

14. Dispositif de soutien selon l'une des revendications 12 ou 13, **caractérisé en ce que** les fentes de guidage (265) sont disposées légèrement en oblique de façon à monter radialement vers l'extérieur par rapport à l'axe de direction (218).
